# EUROPÄISCHE PATENTANMELDUNG

(11) **EP 1 120 320 A2**
(43) Veröffentlichungstag der Anmeldung: **01.08.2001**
(21) Anmeldenummer: 01100196.3
(22) Anmeldetag: 18.01.2001
(51) Int. Cl.: B60S 1/40

(54) **Anschlussvorrichtung für ein Wischerblatt**

(30) Priorität: 28.01.2000 DE 10003589
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Die Erfindung betrifft eine Anschlußvorrichtung für ein Wischerblatt zur Anordnung am Wischerarm einer Scheibenwischeranlage, mit wenigstens einem Gelenkbolzen und einer als Schwenklager ausgebildeten Rastaufnahme für diesen. Sie löst die Aufgabe, eine derartige Anschlußvorrichtung so zu gestalten, daß das Wischerblatt auf einfache Weise in seiner Arbeitsstellung zuverlässig am Wischerarm gehaltert ist und auf ebenso einfache Weise austauschbar ist. Dazu ist die Rastaufnahme (6, 19) hohlzylinderförmig ausgebildet und weist eine spaltförmige Ausnehmung (10, 21) in axialer Richtung auf, und der Gelenkbolzen (4, 17) ist in der Rastaufnahme (6, 19) abgeflacht, wobei die Dicke (D) des abgeflachten Bereiches gleich oder größer als die Breite der Ausnehmung (10, 21) ist. Die radiale Richtung, in der die Ausnehmung (10, 21) ausgebildet ist , ist in der vorbestimmten Arbeitsstellung des Wischerblattes (2, 11) am Wischerarm (3, 12) quer zur Abflachung und in der Montagestellung parallel zur Abflachung gegeben ist.

## Beschreibung

Die Erfindung betrifft eine Anschlußvorrichtung für ein Wischerblatt zur Anordnung am Wischerarm einer Scheibenwischeranlage, insbesondere an einem Fahrzeug.

Scheibenwischeranlagen für Fahrzeugscheiben sind mit austauschbaren Wischerblättern ausgerüstet, um diese bei Unbrauchbarkeit oder stärkeren Verschleiß ersetzen zu können. Das Wischerblatt ist an einem Wischerarm schwenkbeweglich und lösbar angeordnet und weist in der Regel einen Träger und eine Wischerleiste mit einer Wischlippe auf, die infolge eines durch den Wischerarm auf das Wischerblatt aufgebrachten Anpreßdruckes an der jeweiligen Scheibe des Fahrzeugs anliegt. Die Anordnung eines derartigen Wischerblattes am Wischerarm erfolgt über eine Anschlußvorrichtung, direkt oder über ein Bügelsystem, wobei die direkte Anordnung den Vorteil einer kleineren Bauhöhe mit sich bringt.

Gegenstand der DOS 2 324 702 ist ein aus einer einstückigen Wischerblatthalterung und einer in dieser festgelegten Wischerleiste gebildetes Wischerblatt, bei dem die Wischerblatthalterung als ein zur Wischerleiste und zur Fahrzeugscheibe hin konkav gewölbter und im Querschnitt U-förmiger Kunststoff-Bügel mit im Stegbereich ausgebildeten Durchbrüchen für an der Wischerleiste angeformte Rastansätze ausgebildet ist. Am Kunststoff-Bügel sind mittig Seitenflansche und ein Lagerbolzen (Gelenkbolzen) einer Anschlußvorrichtung für eine am Wischerarm angeordnete und nicht näher beschriebene Aufnahmeeinrichtung für den Gelenkbolzen einstückig angeformt.

Eine Anschlußvorrichtung zur lösbaren Verbindung eines Wischerblattes mit einem Wischerarm ist in der DE 197 39 256 A1 beschrieben. Diese ist aus einem an dem freien Ende des Wischerarmes ausgebildeten Haken und einem am Wischerblatt fest angeordneten Gelenkbolzen, der mit dem Haken in Eingriff gebracht wird, und aus nicht näher dargestellten Sicherheitsmitteln gebildet. Der Gelenkbolzen ist zwischen paarweise angeordneten Schenkeln gehaltert, die mittig die Federschienen des Wischerblattes über- und untergreifen.

In der DE 33 40 449 ist des weiteren ein Scheibenwischer mit einem zwischen dessen Wischerarm und dem Bügelsystem des Wischerblattes angeordneten Verbindungsstück offenbart, das eine Rastaufnahme mit zwei Federzungen für einen zwischen den Seitenwangen eines Tragbügels des Bügelsystems gehaltenen Gelenkbolzen aufweist und passend zwischen den Seitenwangen geführt ist. Zur Stabilisierung ist das Verbindungsstück im Bereich beidseits der Rastaufnahme mit einer Einlage aus einem harten Material versehen.

Die vorstehend beschriebenen Anschlußvorrichtungen erfordern entweder zusätzliche Sicherungs- bzw. Verriegelungsmittel für eine zuverlässige Verbindung als Vorraussetzung für einen sicheren Betrieb oder aufwendigere Konstruktionen für einen solchen.

Es ist deshalb Aufgabe der Erfindung, eine Anschlußvorrichtung für ein Wischerblatt am Wischerarm einer Scheibenwischeranlage nach dem Oberbegriff des Anspruchs 1 so zu gestalten, daß das Wischerblatt auf einfache Weise in seiner Arbeitsstellung zuverlässig am Wischerarm gehaltert ist und auf ebenso einfache Weise austauschbar ist.

Diese Aufgabe wird bei einer Anschlußvorrichtung nach dem Oberbegriff des Anspruchs 1 durch dessen kennzeichnende Merkmale gelöst.

Die Erfindung besteht darin, daß bei einer aus einem Gelenkbolzen und einer als Schwenklager ausgebildeten Rastaufnahme für diesen gebildeten Anschlußvorrichtung, die Rastaufnahme hohlzylindrisch ausgebildet ist und eine spaltförmige Ausnehmung in axialer Richtung aufweist, der Gelenkbolzen in der Rastaufnahme abgeflacht ist, wobei die Dicke des abgeflachten Bereiches gleich oder geringfügig größer als die Breite der Ausnehmung ist und die radiale Richtung, in der die Ausnehmung ausgebildet ist, in der vorbestimmten Arbeitsstellung des Wischerblattes am Wischerarm quer zur Abflachung und in der Montagestellung parallel zur Abflachung gegeben ist. Zur Montage des Wischerblattes am Wischerarm wird dieses in Senkrechtstellung zum Wischerarm gebracht. Dadurch gelangt der abgeflachte Gelenkbolzen mit seiner Abflachung in Parallelstellung zur radialen Anordnungsrichtung der Ausnehmung und kann in diese hineingedrückt werden, wobei die beiden die Ausnehmung begrenzenden Wandungen elastisch geringfügig auseinandergedrückt werden. Nach dem Einrasten des Gelenkbolzens in der Rastaufnahme wird das Wischerblatt in seine am Wischerarm gegebene Arbeitsstellung, in der es im wesentlichen parallel zum Wischerarm angeordnet ist, geschwenkt. Dadurch gelangt der Gelenkbolzen mit seiner Abflachung in eine Senkrechtstellung zur radialen Anordnungsrichtung der spaltförmigen Ausnehmung und ist in dieser zuverlässig und schwenkbar gehaltert, da die beiden Wandungen nur noch durch äußere Kraftaufwendung auseinandergedrückt werden können. Eine Demontage des Wischerblattes erfolgt ebenfalls in der Senkrechtstellung des Wischerblattes zum Wischerarm. Damit ist eine konstruktiv einfache, jedoch sehr zuverlässige Anschlußvorrichtung gegeben, die ohne weitere Sicherungs- oder Verrastungsmittel auskommt und mit der eine äußerst einfache Montage und Demontage eines Wischerblattes am Wischerarm einer Scheibenwischeranlage erfolgen kann.

Der Gelenkbolzen ist bevorzugt beidseits seines Durchmessers abgeflacht, um die Montage und Demontage zu erleichtern und während dieser Vorgänge stets die gleichen Kraftverhältnisse zu haben.

Vorteilhaft ist es, wenn der Gelenkbolzen am Wischerblatt angeordnet und die Rastaufnahme am Wischerarm ausgebildet ist, weil dadurch die spaltförmige Ausnehmung der Rastaufnahme in der Arbeitsstellung des Wischerblattes scheibenseitig angeordnet ist und die Gefahr von Schmutzablagerungen, die die Schwenkbarkeit des Wischerblattes beeinträchtigen können, weitgehend reduziert ist. Bei Anordnung des Gelenkbolzens am Wischerarmende müßte die spaltförmige Ausnehmung der dann am Wischerblatt ausgebildeten Rastaufnahme aus Montagegründen an der der Wischlippe abgewandten Seite derselben angeordnet sein und wäre damit in der Arbeitsstellung scheibenabgewandt angeordnet.

Die Anschlußvorrichtung kann in Abhängigkeit von der Ausführung des Wischerblattes so ausgebildet sein, daß der Gelenkbolzen zwischen zwei Seitenwangen am Hauptbügel eines Bügelsystems des Wischerblattes angeordnet und die Rastaufnahme an einem am Wischerarmende angeordneten Lagerbock ausgebildet ist, der zwischen den Seitenwangen anordbar und mit dem Gelenkbolzen lösbar in Eingriff bringbar ist. Der Lagerbock wird dabei an den Seitenwangen geführt und abgestützt, wodurch die Stabilität der Verbindung erhöht wird. Der Gelenkbolzen kann jedoch auch, wenn das Wischerblatt nicht mit einem Bügelsystem ausgestattet ist, an einem Trägerelement des Wischerblattes für die gummielastische Wischerleiste angeordnet sein, so daß dieser beidseits nach außen vorsteht und Gelenkzapfen ausbildet. Zum Eingriff mit diesen sind am Wischerarmende zwei Lagerböcke mit jeweils einer Rastaufnahme angeordnet, die einen der Breite des Wischerblattes entsprechenden lichten Abstand voneinander haben, so daß das Wischerblatt schwenkbeweglich zwischen diesen anordbar ist.

Bei diesen Ausführungen können der Gelenkbolzen parallel zur Wischerblatt-Längsachse abgeflacht und die radiale Anordnungsrichtung der Ausnehmung an der Rastaufnahme senkrecht zur Wischerarm-Längsachse gegeben sein. Alternativ dazu kann jedoch der Gelenkbolzen auch quer zur Wischerblatt-Längsachse abgeflacht sein. Die an der Rastaufnahme ausgebildete Ausnehmung ist dann in Richtung der Wischerarm-Längsachse und stirnseitig am Wischerarm angeordnet.

Die Erfindung wird nachstehend anhand von Ausführungsbeispielen erläutert. In den zugehörigen Zeichnungen zeigen, teilweise schematisch:
- Fig. 1:: ein Wischerblatt in Seitenansicht,
- Fig. 2:: das Wischerblatt in Draufsicht,
- Fig. 3:: eine Anschlußvorrichtung in der Arbeitsstellung des Scheibenwischers, teilweise geschnitten,
- Fig. 4:: die Anschlußvorrichtung in der Montagestellung, teilweise geschnitten,
- Fig. 5:: ein Wischerblatt in einer anderen Ausführung,
- Fig. 6:: einen Querschnitt durch das Wischerblatt mit Blick auf den Gelenkbolzen der Anschlußvorrichtung,
- Fig. 7:: diese Anschlußvorrichtung in der Montagestellung und
- Fig. 8:: die Anschlußvorrichtung in der Arbeitsstellung des Scheibenwischers.

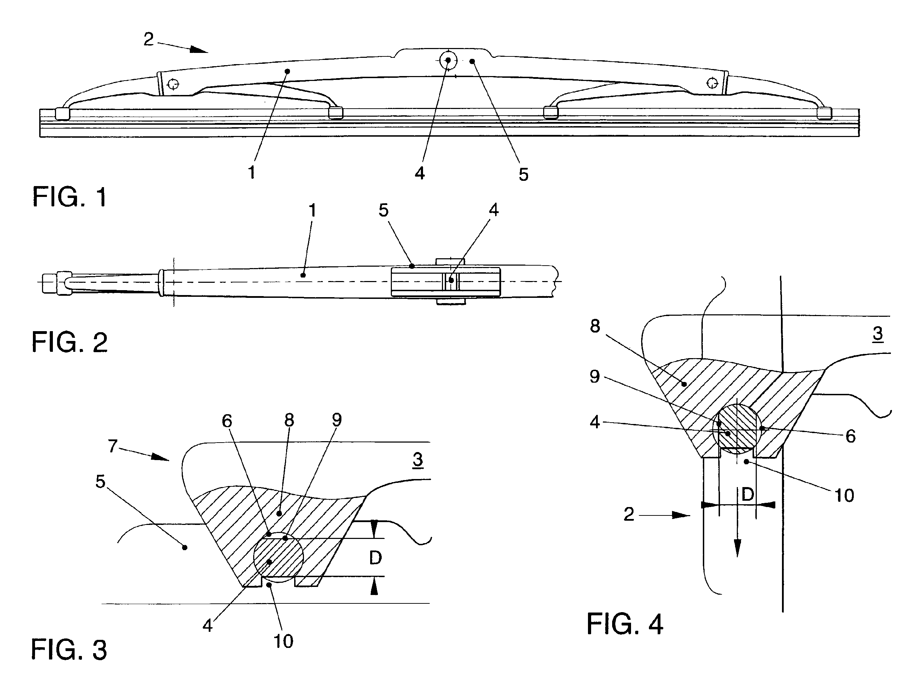

In den Fig. 1 bis 4 ist eine Anschlußvorrichtung für ein ein Bügelsystem mit einem Hauptbügel 1 aufweisendes Wischerblatt 2 zur Anordnung am Wischerarm 3 einer Scheibenwischeranlage dargestellt. Diese ist aus einem Gelenkbolzen 4, der an zwei Seitenwangen 5 am Hauptbügel 1 gehaltert ist, und einer Rastaufnahme 6 gebildet, die an einem am Wischerarmende 7 angeordneten Lagerbock 8 ausgebildet ist, der zwischen den Seitenwangen 5 mit dem Gelenkbolzen 4 lösbar in Eingriff steht. Insbesondere in den Fig. 3 und 4 ist zu erkennen, daß der Gelenkbolzen 4 parallel zur Längsachse des Hauptbügels 1 und damit der Wischerblatt-Längsachse beidseits seines Durchmessers abgeflacht ist und zwei ebene und parallele Seitenflächen 9 hat. Die Rastaufnahme 6 ist hohlzylinderförmig ausgebildet und weist eine spaltförmige Ausnehmung 10 in axialer Richtung auf, deren Breite geringer als die Dicke D des abgeflachten Gelenkbolzens 4 ist. Die radiale Anordnungsrichtung der Ausnehmung 10 an der Rastaufnahme 6 ist quer zur Wischerarm-Längsachse gegeben. Fig. 4 zeigt die Montage- bzw. Demontagestellung für das Wischerblatt 2 am Wischerarm 3, in der das Wischerblatt 2 in eine Senkrechtstellung zum Wischerarm 3 geschwenkt ist. In dieser Senkrechtstellung ist der abgeflachte Gelenkbolzen 4 mit seiner Abflachung quer zur Wischerarm-Längsachse und damit parallel zur Ausnehmung 10 angeordnet. In dieser Stellung kann der Gelenkbolzen 4 mit wenig Kraftaufwand aus der Rastaufnahme 6 herausgezogen (Pfeilrichtung) bzw. auch hineingedrückt werden, wodurch das Wischerblatt 2 aus seiner Verbindung mit dem Wischerarm 3 gelöst bzw. mit diesem verbunden wird. In Fig. 3 ist das Wischerblatt 2 in seine vorbestimmte Arbeitsstellung am Wischeram 3 geschwenkt, in der es parallel zu diesem angeordnet ist. Der Gelenkbolzen 4 ist in dieser Stellung mit seiner Abflachung parallel zur Wischerarm-Längsachse und damit jedoch quer zur Anordnungsrichtung der Ausnehmung 10 angeordnet und somit in dieser verrastet.

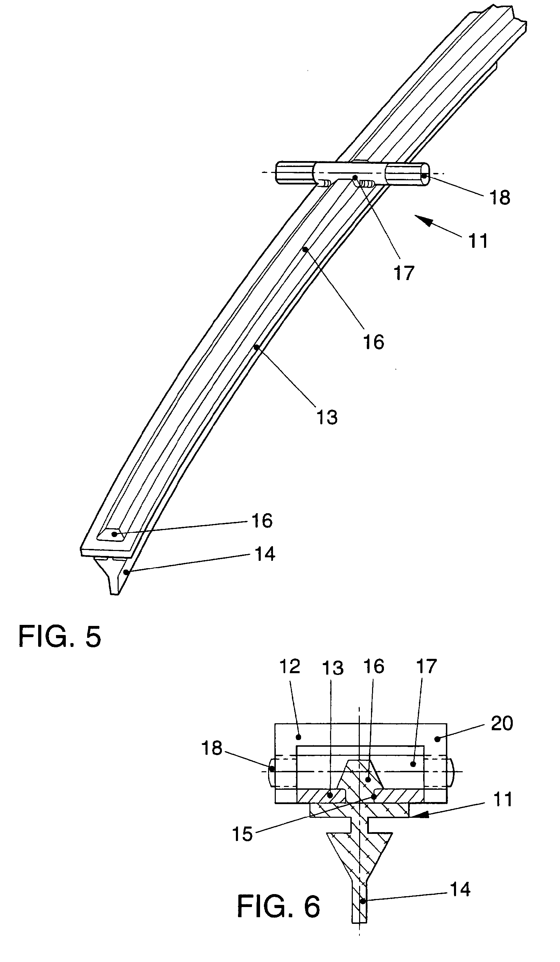

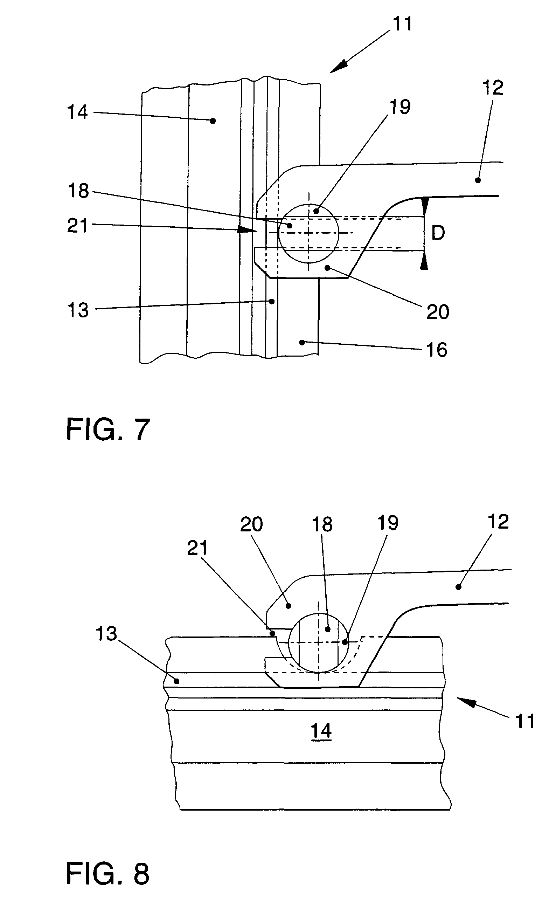

In den Fig. 5 bis 8 ist eine weitere Ausführung einer Anschlußvorichtung mit einem Wischerblatt 11 und einem Wischerarm 12 dargestellt. Das Wischerblatt weist eine gekrümmte Trägerschiene 13 aus einem federelastischen Material und eine an diesem verrastete gummielastische Wischerleiste 14 auf. Die Rastverbindung ist durch einen langgestreckten Aufnahmeschlitz 15 an der Trägerschiene 13 und einen an der Wischerleiste 14 ausgebildeten Raststeg 16 gegeben. An der Trägerschiene 13 ist mittig ein Gelenkbolzen 17 quer zu ihrer Längsachse fest angeordnet, der beidendig nach außen vorsteht und zwei Gelenkzapfen 18 zur Verrastung mit einer am Wischerarm 12 angeordneten Rastaufnahme 19 ausbildet. Die Gelenkzapfen 18 sind quer zur Längsachse des Wischerblattes 11 beidseitig abgeflacht. In der Fig. 7 ist das Wischerblatt 11 in einer Senkrechtstellung zum Wischerarm 12 dargestellt, der an seinem Ende zwei parallele Lagerböcke 20 (Fig. 6) mit jeweils einer hohlzylindrischen Rastaufnahme 19 aufweist, die einen lichten Abstand voneinander haben, der der Breite des Wischerblattes 11 entspricht. In der jeweiligen Rastaufnahme ist eine spaltförmige Ausnehmung 21 in axialer Richtung ausgebildet, die in radialer Richtung parallel zur Wischeram-Längsachse und an der Stirnseite des Wischerarmes 12 angeordnet ist. Auch hier ist die Breite der Ausnehmung 21 gleich oder kleiner als die Dicke D der abgeflachten Gelenkzapfen 18. In der dargestellten Senkrechtstellung ist der jeweilige Gelenkzapfen 18 mit der Abflachung parallel zur Ausnehmung 21 angeordnet und durch leichten Druck montierbar bzw. mit wenig Kraftaufwand demontierbar, wobei die jeweilige Ausnehmung 21 elastisch aufgeweitet wird. Fig. 8 zeigt die Anordnung des Wischerblattes 11 am Wischerarm 12 in der Arbeitsstellung des Scheibenwischers, in der das Wischerblatt 11 in eine im wesentlichen Parallelstellung zum Wischerarm 12 geschwenkt ist. Die Gelenkzapfen 18 sind mit ihrer Abflachung quer zur Ausnehmung 21 angeordnet und somit sicher in der Rastaufnahme 19 gehaltert.

### BEZUGSZEICHENLISTE

- 1: Hauptbügel
- 2: Wischerblatt
- 3: Wischerarm
- 4: Gelenkbolzen
- 5: Seitenwange
- 6: Rastaufnahme
- 7: Wischerarmende
- 8: Lagerbock
- 9: Seitenfläche
- 10: Ausnehmung
- 11: Wischerblatt
- 12: Wischerarm
- 13: Trägerschiene
- 14: Wischerleiste
- 15: Aufnahmeschlitz
- 16: Raststeg
- 17: Gelenkbolzen
- 18: Gelenkzapfen
- 19: Rastaufnahme
- 20: Lagerbock
- 21: Ausnehmung

## Patentansprüche

1. Anschlußvorrichtung für ein Wischerblatt zur Anordnung am Wischerarm einer Scheibenwischeranlage, mit wenigstens einem Gelenkbolzen und einer als Schwenklager ausgebildeten Rastaufnahme für diesen, **dadurch gekennzeichnet**, daß die Rastaufnahme (6, 19) hohlzylinderförmig ausgebildet ist und eine spaltförmige Ausnehmung (10, 21) in axialer Richtung aufweist, daß der Gelenkbolzen (4, 17) in der Rastaufnahme (6, 19) abgeflacht ist, wobei die Dicke (D) des abgeflachten Bereiches gleich oder größer als die Breite der Ausnehmung (10, 21) ist, und daß die radiale Richtung, in der die Ausnehmung (10, 21) ausgebildet ist, in der vorbestimmten Arbeitsstellung des Wischerblattes (2, 11) am Wischerarm (3, 12) quer zur Abflachung und in der Montagestellung parallel zur Abflachung gegeben ist.

2. Anschlußvorrichtung nach Anspruch 1, **dadurch gekennzeichnet**, daß der Gelenkbolzen (4, 17) beidseits seines Durchmessers abgeflacht ist.

3. Anschlußvorrichtung nach Anspruch 1, **dadurch gekennzeichnet**, daß der Gelenkbolzen (4, 17) am Wischerblatt (2, 11) angeordnet und die Rastaufnahme (6, 19) am Wischerarm (3, 12) ausgebildet ist.

4. Anschlußvorrichtung nach Anspruch 3, **dadurch gekennzeichnet**, daß der Gelenkbolzen (4) zwischen zwei Seitenwangen (5) am Hauptbügel (1) eines Bügelsystems des Wischerblattes (2) angeordnet und die Rastaufnahme (6) an einem am Wischerarmende (7) angeordneten Lagerbock (8) ausgebildet ist, der zwischen den Seitenwangen (5) mit dem Gelenkbolzen (4) lösbar in Eingriff bringbar ist.

5. Anschlußvorrichtung nach Anspruch 3, **dadurch gekennzeichnet**, daß der Gelenkbolzen (17) an einem Trägerelement (13) des Wischerblattes (11) für eine gummielastische Wischerleiste (14) mittig angeordnet ist und beidseits nach außen vorsteht, und daß am Wischerarmende zwei Lagerböcke (19) mit jeweils einer Rastaufnahme angeordnet sind, die einen lichten Abstand voneinander haben, der der Breite des Wischerblattes (11) entspricht.

6. Anschlußvorrichtung nach einem der Ansprüche 3 bis 5, **dadurch gekennzeichnet**, daß der Gelenkbolzen (4) parallel zur Wischerblatt-Längsachse abgeflacht ist und die radiale Anordnungsrichtung der Ausnehmung (10) an der Rastaufnahme (6) quer zur Wischerarm-Längsachse gegeben ist.

7. Anschlußvorrichtung nach einem der Ansprüche 3 bis 5, **dadurch gekennzeichnet**, daß der Gelenkbolzen (17) quer zur Wischerblatt-Längsachse abgeflacht ist, und daß die radiale Anordnungsrichtung der Ausnehmung (21) an der Rastaufnahme (19) parallel zur Wischerarm-Längsachse gegeben und die Ausnehmung (21) strinseitig angeordnet ist.
